# EUROPÄISCHE PATENTSCHRIFT

(11) **EP 2 657 631 B1**
(45) Veröffentlichungstag und Bekanntmachung des Hinweises auf die Patenterteilung: **15.07.2020**
(21) Anmeldenummer: 13163041.0
(22) Anmeldetag: 10.04.2013
(51) Int. Cl.: F25D 3/12, A23L 3/375, F25D 3/10

(54) **Verfahren und Vorrichtung zum Kühlen von Produkten**
Method and device for cooling products
Procédé et dispositif destinés au refroidissement de produits

(30) Priorität: 27.04.2012 DE 102012008593
(43) Veröffentlichungstag der Anmeldung: 30.10.2013
(73) Patentinhaber: Messer Group GmbH, 65812 Bad Soden (DE); Messer France S.A.S., 92816 Puteaux Cedex (FR)
(72) Erfinder: Emir, Tebib, F-77410 Gressy (FR); Gockel, Frank, 42553 Velbert (DE)
(74) Vertreter: Münzel, Joachim R.

(56) Entgegenhaltungen:
- WO-A1-00/36351
- WO-A1-98/58218
- DE-A1- 10 030 857
- DE-A1-102004 011 194
- DE-B3-102005 005 638
- FR-A1- 2 953 370
- GB-A- 1 483 338
- GB-A- 2 276 227
- US-A- 6 079 215

## Beschreibung

Die Erfindung betrifft ein Verfahren zum Kühlen von Produkten, bei dem unter Druck herangeführtes flüssiges Kohlendioxid an einer Kohlendioxid-Entspannungsdüse zu Kohlendioxidgas und Kohledioxidschnee entspannt und der Kohlendioxidschnee zum Kühlen eines Produkts eingesetzt wird. Die Erfindung betrifft des Weiteren eine entsprechende Vorrichtung.

Bei derartigen Einrichtungen wird das flüssige Kohlendioxid unter einem Druck von 5,18 bar abs. und in der Regel bei Umgebungstemperatur herangeführt und an der Entspannungsdüse entspannt. Bei der Entspannung auf Atmosphärendruck kühlt sich das Kohlendioxid auf eine Temperatur von -78,9°C (194 K) ab, wobei ein Gemisch aus Kohlendioxidschnee und kaltem Kohlendioxidgas entsteht. Zumindest die Kohlendioxidpartikel werden anschließend zum Kühlen von Produkten eingesetzt, beispielsweise auf die Oberfläche eines zu kühlenden Produkts aufgetragen. Aufgrund seiner Ungiftigkeit, seiner inerten Eigenschaften und des Umstands, dass es bei Erwärmung rückstandsfrei sublimiert, eignet sich Kohlendioxidschnee insbesondere zum Kühlen von Lebensmittelprodukten. Typische Anwendungen sind beispielsweise:
- Krustieren: Hier wird ein Lebensmittelprodukt nur an der Oberfläche abgekühlt, um beispielsweise eine mechanische Stabilität des Produkts bei einer mechanischen Behandlung, beispielsweise beim Zerteilen oder Schneiden des Produkts zu gewährleisten. Dazu wird Kohlendioxidschnee mittels oberhalb des zu kühlenden Produkts angeordneter Schneehörner auf die Oberfläche des Lebensmittelprodukts aufgetragen.
- Kryogene Kühltunnel: Hierbei sind mehrere Entspannungsdüsen für Kohlendioxid in Laufrichtung des Produkts hintereinander angeordnet. Das beim Einsatz des Kühltunnels an den Entspannungsdüsen erzeugte Gemisch aus Kohlendioxidschnee und Kohlendioxidgas wird im Innenraum des Tunnels verteilt. Ventilatoren innerhalb des Tunnels sorgen dabei für eine möglichst gleichmäßige Verteilung des Kohlendioxidschnees innerhalb des Tunnels.
- Mischerkühlung: Hierbei wird das flüssige oder feste Kühlmedium (flüssiger Stickstoff oder Kohlendioxidpartikel) mittels Injektionsdüsen oder eine andere Zuführung in einen das Produkt enthaltenden Behälter eingebracht.

Die Kühlung mit Kohlendioxid in Form fester Partikel (Schneepartikel oder Pellets) ermöglicht eine sehr effektive Fest- Fest Übertragung der Wärme vom Produkt auf das Kühlmedium. Allerdings ist die Kühlrate des Kohlendioxidschnees aufgrund der Temperatur von ca. minus 78,9°C (194 K) begrenzt. Weiterhin ist bei der Entspannung von flüssigem Kohlendioxid, bei dem das flüssige Kohlendioxid in gasförmiges Kohlendioxid und Kohlendioxidschnee übergeht, der Anteil an erzeugtem Kohlendioxidschnee umso höher, je kälter das flüssige Kohlendioxid vor der Entspannung war. Bei der Erzeugung von festem Kohlendioxid wird daher versucht, die Ausbeute an Kohlendioxidschnee dadurch zu erhöhen, dass das flüssige Kohlendioxid vor der Entspannung gekühlt wird.

Da sich der bei der Entspannung von flüssigem Kohlendioxid erzeugte Kohlendioxidschnee bei Wärmeeintrag, d.h. im Energieaustausch mit einem wärmeren Produkt, entlang der Sublimationskurve bewegt, sublimiert ein Teil des festen Kohlendioxids bereits unmittelbar nach dem Auftragen auf ein zu kühlendes Produkt. Das dabei entstehende gasförmige Kohlendioxid kann, ähnlich dem von siedenden Flüssigkeiten her bekannten Leidenfrost-Effekt, ein Gaspolster zwischen Kohlendioxidschnee und Produkt bilden und dadurch die Effektivität der Kühlung mindern.

Um den vorgenannten Nachteilen der Kühlung mit Kohlendioxidschnee zu begegnen wurden in der EP 1 887 296 A2 sowie der US 2010/00474224 A1 vorgeschlagen, als Kühlmedium eine Suspension aus flüssigem Stickstoff und Trockeneisteilchen einzusetzen. Beim Kühlvorgang wird Wärme vom Produkt auf die Trockeneisteilchen übertragen, die zuvor in der Suspension auf die tiefe Temperatur des flüssigen Stickstoffs (77 K) gebracht wurden. Nachteilig dabei ist, dass eine derartige Suspension nur schwer zur verdüsen ist und daher für viele Kühlanwendungen als Kühlmedium nicht in Betracht kommt.

Einrichtungen zum Kühlen von Produkten mit Kohlendioxidschnee sind auch aus der FR 2 953 370 A1, der GB 1 483 338 A, der DE 10 2004 011 194 A1 und der US 6 079 215 B1 bekannt.

Aus der DE 10 2005 005 638 B3 ist eine Einrichtung zum Reinigen mit Trockeneisstrahlen bekannt, bei dem ein Gemisch aus Kohlendioxidschnee und Kohlendioxidgas an einer Entspannungsdüse aus flüssigem Kohlendioxid erzeugt und in einem Trägergasstrom aus Luft oder einem inerten Gas in Richtung auf eine zu bestrahlende Fläche ausgetragen wird.

Der Erfindung liegt daher die Aufgabe zu Grunde, ein Verfahren und eine Vorrichtung zum Kühlen von Produkten zu schaffen, bei dem bzw. bei der die Probleme, die bei flüssigen kryogenen Kühlmedien auftreten, überwunden werden und gleichzeitig die Effizienz der Kühlung gegenüber den aus dem Stand der Technik bekannten Verfahren erhöht werden kann.

Gelöst ist diese Aufgabe durch ein Verfahren mit Merkmalen des Patentanspruchs 1 sowie durch eine Vorrichtung mit den Merkmalen des Patentanspruchs 4.

Erfindungsgemäß ist ein Verfahren zum Kühlen von Produkten mit Trockeneisteichen (Kohlendioxidpartikel) der eingangs genannten Art dadurch gekennzeichnet, dass der aus der Kohlendioxid-Entspannungsdüse austretende Strom aus Kohlendioxidschnee und Kohlendioxidgas nach seiner Erzeugung mit einem kalten Gasstrom durchmischt und dadurch gekühlt wird.

Das Kohlendioxid wird also nach dem Entspannungsvorgang, d.h. nach dem Austritt aus der Entspannungsdüse, mit einem kalten Gasstrom durchmischt, der dem Strom aus Kohlendioxidteilchen und Kohlendioxidgas über eine von der Entspannungsdüse beabstandete Kaltgasdüse zugeführt wird. Die Temperatur des kalten Gasstroms (im Folgenden auch: Kaltgasstrom) liegt dabei deutlich unter der Sublimationstemperatur des festen Kohlendioxidschnees, also unter -78,9°C (194 K), beispielsweise beträgt die Temperatur des Kaltgasstroms weniger als -100°C (173 K), bevorzugt weniger als -150°C (123 K). Bei der Durchmischung wird der Kohlendioxidschnee daher auf einen Temperaturwert gekühlt, der deutlich unter seiner Sublimationstemperatur liegt (Unterkühlung). Der auf diese Weise beispielsweise auf einen Temperaturwert von ca. -100°C (173 K) unterkühlte Kohlendioxidschnee eignet sich besonders zur Kühlung von Produkten, da der oben erwähnte Leidenfrosteffekt nicht oder erst mit deutlicher Verzögerung auftritt und somit die Effizienz des Kühlvorgangs gegenüber bisher üblichen Verfahren zur Kühlung mit Kohlendioxidschnee gesteigert wird. Weiterhin kann der zur Kühlung des Kohlendioxids eingesetzte Kaltgasstrom auch zum pneumatischen Transport der Kohlendioxid-Schneepartikel eingesetzt werden, beispielsweise zum Auftragen auf die Oberfläche eines zu kühlenden Produkts, oder der Strom aus unterkühltem Kohlendioxidschnee und unterkühltem Kohlendioxidgas wird vor Bewältigung einer Kühlaufgabe zunächst einer Trenneinrichtung, beispielsweise einem Zyklon, zugeführt, in dem eine Trennung der unterkühlten Kohlendioxidteilchen vom Kohlendioxidgas erfolgt. Das Kohlendioxidgas kann anschließend einer anderen Verwendung zugeführt werden, beispielsweise zur Vorkühlung des flüssigen Kohlendioxids vor dessen Entspannung an der Entspannungsdüse.

Bevorzugt wird der zur Kühlung des Stroms aus Kohlendioxidschnee und Kohlendioxidgas vorgesehene Kaltgasstrom zur Vorkühlung des flüssigen Kohlendioxids vor dessen Zuführung an die Kohlendioxid-Entspannungsdüse eingesetzt. In diesem Falle wird bereits das zugeführte flüssige Kohlendioxid auf einen Temperaturwert deutlich unterhalb der Umgebungstemperatur, beispielsweise auf einen Temperaturwert zwischen -25°C und 0°C (248 K bis 273 K) gekühlt. Dadurch wird der Anteil an festem Kohlendioxid gegenüber dem Anteil von Kohlendioxidgas nach der Entspannung erhöht.

Die Erfindung sieht vor, dass ein Teilstrom des zur Kühlung des Stroms aus Kohlendioxidschnee und Kohlendioxidgas eingesetzten Kaltgasstroms rezirkuliert und vor oder nach der Kühlung durch den Kaltgasstrom zur Kühlung des aus der Entspannungsdüse austretenden Stroms aus Kohlendioxidschnee und Kohlendioxidgas eingesetzt wird. Bei dieser Ausführungsform der Erfindung wird also zumindest ein Teil des zum Kühlen des Kohlendioxids eingesetzten Kaltgases zurückgeführt und zusätzlich zu dem frisch zugeführten Kaltgas erneut zum Kühlen des Kohlendioxids eingesetzt. Auf diese Weise kann die Menge an zur Kühlung des Kohlendioxids eingesetzten Kaltgases insgesamt reduziert werden. Im rezirkulierendem Gasstrom können zugleich auch Partikel des Kohlendioxidschnees mitgeführt werden, wodurch diese intensiver mit dem Kaltgasstrom durchmischt und somit stärker unterkühlt werden; alternativ ist jedoch auch vorstellbar, solche Partikel durch geeignete Mittel, wie beispielsweise Siebe, zurückzuhalten. Zweckmäßigerweise erfolgt die Rezirkulation automatisch, beispielsweise über eine von dem Strom aus Kohlendioxidschnee und Kohlendioxidgas gesteuerte Venturidüse, mittels dessen ein Unterdruck erzeugt wird, der einen Teil des Kaltgas, Kohlendioxidgas und Kohlendioxidpartikel enthaltenen Gasstroms einsaugt und dem aus der Entspannungsdüse austretenden Strom aus Kohlendioxidschnee und Kohlendioxidgas zuführt.
Beim Kaltgasstrom handelt es sich bevorzugt um ein kaltes kryogenes Gas, beispielsweise Stickstoff, Sauerstoff, Argon, oder Helium, das dem Strom aus Kohlendioxidschnee und Kohlendioxidgas im gasförmigen oder verflüssigten Zustand zugeführt wird; der Begriff "Kaltgas" soll im Rahmen der Erfindung somit auch ein verflüssigtes kryogenes Gas einschließen. Um eine effiziente Kühlung des Kohlendioxids zu bewirken, weist der Stickstoff unmittelbar vor dem Kontakt mit dem Strom aus Kohlendioxidschnee und Kohlendioxidgas eine Temperatur von unter minus 100°C (173 K), bevorzugt von unter minus 150°C (123 K), auf, oder, bei Zuführung im flüssigen Zustand, von minus 196°C (77 K) (bei 1 bar Umgebungsdruck). Alternativen zu Stickstoff als Kaltgas sind beispielsweise Sauerstoff (Siedetemperatur -183°C [90 K]) oder ein Edelgas wie Argon (Siedetemperatur -186°C [87 K]), die ebenfalls bevorzugt bei Temperaturen unter - 100°C (173 K) bzw. -150°C (127 K) oder im flüssigen Zustand mit ihren Siedetemperaturen mit dem Strom aus Kohlendioxidschnee und Kohlendioxidgas in Kontakt gebracht werden. Soweit es sich beim Kaltgas um ein verflüssigtes Gas handelt, beispielsweise flüssiger Stickstoff oder flüssiges Argon, verdampft dieses beim Kontakt mit dem Strom aus Kohlendioxidgas und Kohlendioxidschnee, wobei es die dabei erforderliche Wärme dem Kohlendioxid entzieht.

Die Aufgabe der Erfindung wird auch mit einer Vorrichtung zum Kühlen von Produkten mit Trockeneisteilchen gelöst, die mit einer an einer Druckleitung für flüssiges Kohlendioxid angeschlossenen Kohlendioxid-Entspannungsdüse zum Erzeugen eines Stroms von Trockeneisteilchen ausgerüstet ist und die dadurch gekennzeichnet ist, dass eine an einer Zuleitung für ein kaltes Gas angeschlossenen Kaltgas-Austrittsdüse axial beabstandet vor der Ausmündung der Kohlendioxid-Entspannungsdüse angeordnet ist und eine Einrichtung zum Zuführen der unterkühlten Trockeneisteilchen an ein Produkt vorgesehen ist und die Kaltgas-Austrittsdüse als Ringdüse ausgebildet ist, die konzentrisch zur Ausmündung der Kohlendioxid-Entspannungsdüse angeordnet ist.

Die erfindungsgemäße Vorrichtung weist also eine Austrittsdüse für einen Kaltgasstrom auf, die in Ausströmrichtung axial beabstandet vor der Mündungsöffnung der Kohlendioxid-Entspannungsdüse angeordnet ist. An der Entspannungsdüse wird unter Druck herangeführtes flüssiges Kohlendioxid in einen Strom aus Kohlendioxidschnee (Trockenreisteilchen) und Kohlendioxidgas umgewandet. Anschließend, also erst nach der Entspannung wird dem bereits erzeugten Strom aus Kohlendioxidschnee und Kohlendioxidgas Kaltgas zugeführt und mit diesem vermischt. Beim Kaltgasstrom handelt es sich um ein Gas oder Gasgemisch, dessen Temperatur vor der Vermischung niedriger als die Sublimationstemperatur des Kohlendioxids ist. Durch die axial beabstandete Anordnung der beiden Düsen wird insbesondere vermieden, dass sich durch eine Unterkühlung innerhalb der Entspannungsdüse eine so große Menge an Kohlendioxidschnee bildet, die die Funktionsfähigkeit der Entspannungsdüse beeinträchtigt. Der axiale Abstand zwischen beiden Düsen beträgt beispielsweise zwischen 5 mm und 50 mm, sie kann aber, je nach Bauweise der beiden Düsen, auch darüber oder darunter liegen.

Die Austrittsdüse für das Kaltgas ist als Ringdüse ausgebildet, die konzentrisch, jedoch in Ausströmrichtung beabstandet zur Ausmündung der Kohlendioxid-Entspannungsdüse angeordnet ist. Dadurch wird eine besonders gute Durchmischung des Kaltgasstroms mit dem aus der Kohlendioxid-Entspannungsdüse austretenden Strom aus Kohlendioxidschnee und Kohlendioxidgas bewirkt. Die Ringdüse ist dabei bevorzugt derart angeordnet, dass die Ebene der Ringdüse im Wesentlichen senkrecht zur Strömungsrichtung des Stroms aus Kohlendioxidschnee und Kohlendioxidgas verläuft. Die Ringdüse kann vorteilhaft auch in einem beabstandet vor der Ausmündung der Kohlendioxid-Entspannungsdüse angeordneten zylindrischen Rohr vorgesehen sein, das vom Strom aus Kohlendioxidschnee und Kohlendioxidgas durchströmt wird.

In einer weiteren vorteilhaften Ausgestaltung der erfindungsgemäßen Vorrichtung ist die Kaltgas-Austrittsdüse in einer vor der Ausmündung der Kohlendioxid-Entspannungsdüse angeordneten Venturi-Düse integriert. Der durch die Venturi-Düse geführte Strom aus Kohlendioxidschnee und Kohlendioxidgas führt zu einem Unterdruck, durch den der Kaltgasstrom aus der Zuleitung angesaugt wird. Es ist in diesem Falle also keine aktive Förderung des Kaltgasstroms mittels Gebläse oder dergleichen erforderlich, bzw. eine solche muss lediglich zur Unterstützung der Förderung des Kaltgasstroms eingesetzt werden.

Zweckmäßigerweise sind die Kohlendioxid-Entspannungsdüse und die Kaltgas-Austrittsdüse in einem Schneehorn integriert. Der unterkühlte Kohlendioxidschnee wird an einer Austrittsöffnung des Schneehorns ausgestoßen und auf die Oberfläche eines zu kühlenden Produkts aufgetragen, während das Kohlendioxidgas bevorzugt abgeführt wird.

In einer besonders vorteilhaften Ausführungsform sind im Schneehorn dabei Mittel zum Rezirkulieren des in der Kohlendioxid-Entspannungsdüse erzeugten und/oder des aus der Kaltgas-Austrittsdüse austretenden kalten Gases vorgesehen. Bei diesen Mitteln kann es sich beispielsweise um eine oder mehrere Venturi-Düsen handeln, durch die der Strom aus Kohlendioxidschnee und Kohlendioxidgas oder der Kaltgasstrom oder der bereits mit dem Strom aus Kohlendioxidschnee und Kohlendioxidgas in Kontakt gebrachte Gasstrom hindurchgeführt wird/werden. Der auf diese Weise herbeigeführte Unterdruck wird dann dazu genutzt, einen Teil des bereits mit dem Strom aus Kohlendioxidschnee und Kohlendioxidgas in Kontakt getretenen Kaltgases zurückzuführen und erneut mit dem Strom aus Kohlendioxidschnee und Kohlendioxidgas in Kontakt zu bringen. Das (ggf. mit Kohlendioxidgas sowie mit Kohlendioxid-Schneepartikel durchmischte) Kaltgas wird so erneut zum Kühlen des Stroms aus Kohlendioxidschnee und Kohlendioxidgas verwendet. Auf diese Weise wird die Kälteenergie des Kaltgases besonders effizient genutzt.

Anhand der Zeichnung soll ein Ausführungsbeispiel der Erfindung näher erläutert werden.

In schematischen Ansichten zeigen:
- Fig. 1:: Eine erfindungsgemäße Vorrichtung in einer ersten Ausführungsform im Längsschnitt,
- Fig. 2:: Eine erfindungsgemäße Vorrichtung in einer zweiten Ausführungsform im Längsschnitt.

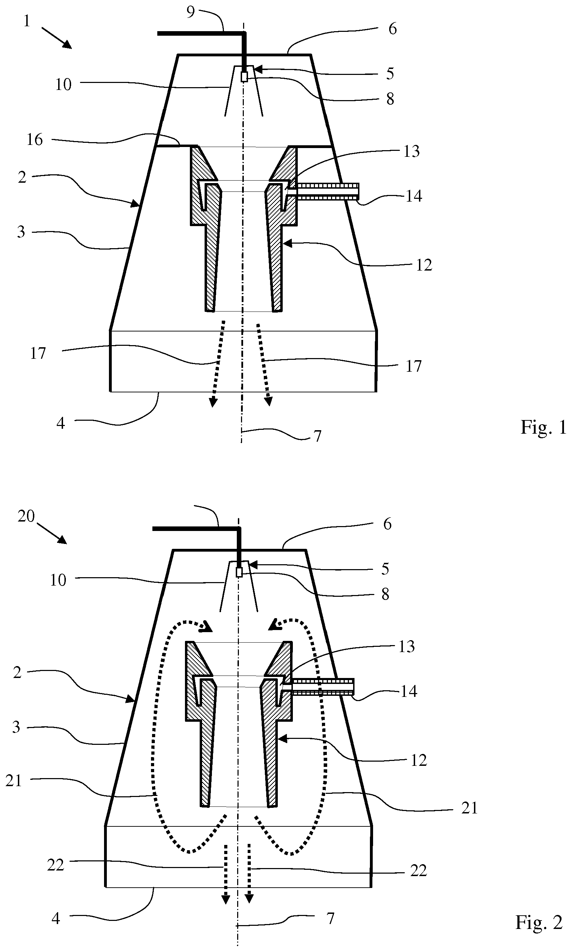

Die in Fig. 1 gezeigte Vorrichtung 1 umfasst ein Schneehorn 2, mittels dessen Kohlendioxidpartikel (Trockeneisteilchen) auf die Oberfläche eines hier nicht gezeigten Gegenstandes aufgetragen werden. Das Schneehorn 2 umfasst einen oberseitig geschlossenen Trichter 3 mit Mündungsöffnung 4 sowie eine Entspannungseinrichtung 5, die an der der Mündungsöffnung 4 entgegen gesetzten, im Übrigen geschlossenen Stirnfläche 6 des Trichters 3 angeordnet ist. Der Trichter 3 ist im Wesentlichen axialsymmetrisch um eine Achse 7 ausgebildet. Die Entspannungseinrichtung 5 umfasst eine Entspannungsdüse 8, die an einer Druckleitung 9 für flüssiges Kohlendioxid angeschlossen ist. Die Entspannungsdüse 8 ist innerhalb eines Führungstrichters 10 aufgenommen, mittels dessen ein aus der Entspannungsdüse 8 austretender Strom aus Kohlendioxidschnee und Kohlendioxidgas in Richtung der Achse 7 gelenkt wird.

Innerhalb des Trichters 3 ist ein Venturi-Rohr 12 aufgenommen, das derart axial beabstandet von der Entspannungseinrichtung 5 angeordnet ist, dass ein aus der Entspannungseinrichtung 5 austretender Strahl aus Kohlendioxidgas und Kohlendioxidschnee im Wesentlichen entlang der Achse 7 durch das Venturi-Rohr 12 hindurchgeführt wird. Im Bereich der engsten Stelle des Venturi-Rohrs 12 ist eine Ringdüse 13 angeordnet, die an eine thermisch isolierte Zuleitung 14 für kalten gasförmigen Stickstoff angeschlossen ist. Durch eine Trennwand 16 sind beim Ausführungsbeispiel nach Fig. 1 die Zuströmseite und die Abströmseite des Venturi-Rohrs 12 strömungstechnisch voneinander getrennt.

Beim Betrieb der Vorrichtung 1 strömt flüssiges Kohlendioxid unter einem Druck von mehr als 5,18 bar, beispielsweise einem Druck zwischen 10 bis 30 bar, durch die Druckleitung 9 und entspannt an der Entspannungsdüse 8 unter Bildung eines Gemisches aus Kohlendioxidgas und Kohlendioxidschnee, wobei es sich auf eine Temperatur von -78,9°C (194 K) abkühlt. Durch den Führungstrichter 10 gelenkt, wird der Strom aus Kohlendioxidgas und Kohlendioxidschnee entlang der Achse 7, durch das Venturi-Rohr 12 hindurch, in Richtung auf die Mündungsöffnung 4 des Trichters 3 ausgetragen. Beim Durchleiten des Stroms aus Kohlendioxidgas und Kohlendioxidschnee durch das Venturi-Rohr 12 entsteht im Venturi-Rohrs 12 ein Unterdruck, aufgrund dessen kalter gasförmiger Stickstoff aus der Ringdüse 13 in den Strom aus Kohlendioxidgas und Kohlendioxidschnee eingesaugt wird. Der an der Ringdüse 13 vorliegende gasförmige Stickstoff hat eine Temperatur von wesentlich unter -78,9°C (194 K), beispielsweise eine Temperatur zwischen -100°C (173 K) und -196°C (77 K). Alternativ oder ergänzend zur Einsaugung des Stickstoffs an der Ringdüse 13 aufgrund des Venturi-Effekts kann der gasförmige Stickstoff an der Ringdüse auch unter Überdruck (gegenüber Umgebungsdruck) vorliegen und in den Strom -78,9°C (194 K) eingetragen werden. In diesem Falle kann anstelle des Venturi-Rohrs 12 auch ein einfaches Rohrstück vorgesehen sein, in das die Ringdüse 13 integriert ist. Das an der Ringdüse 13 eingetragene kalte Stickstoffgas durchmischt sich mit dem Strom aus Kohlendioxidgas und Kohlendioxidschnee und kühlt diesen dabei ab; insbesondere werden die im Strom enthaltenen Partikel aus festem Kohlendioxid auf eine Temperatur unterhalb der Sublimationstemperatur von Kohlendioxid abgekühlt, beispielsweise auf eine Temperatur von ca. -100°C (173 K). Die auf diese Weise unterkühlten Kohlendioxidpartikel werden anschließend aus der Mündungsöffnung 4 des Trichters 3 ausgestoßen (wie durch die Pfeile 17 angedeutet) und beispielsweise auf die Oberfläche eines zu kühlenden Gegenstandes aufgetragen.

Aufgrund der Unterkühlung der Kohlendioxidpartikel sublimiert das Kohlendioxid nicht unmittelbar beim Auftreffen auf den (wärmeren) Gegenstand, da ein Teil der dem Gegenstand entzogenen Wärme zur Aufwärmung der Kohlendioxidpartikel bis zum Erreichen der Sublimationstemperatur aufgewandt werden muss. Die in Fig. 1 gezeigte Variante der Erfindung zeichnet sich durch einen hohen Durchsatz von Trockeneispartikeln aus und ist damit auch zur Kühlung größerer oder wärmerer Oberflächen geeignet. Im Übrigen kann anstelle des beispielhaft als Kaltgas verwendeten gasförmigen Stickstoffs auch ein anderes kryogenes Gas zum Einsatz kommen, beispielsweise Sauerstoff, Argon oder Helium, jeweils im gasförmigen oder verflüssigten Zustand.

Die in Fig. 2 gezeigte Vorrichtung 20 unterscheidet sich von der Vorrichtung 1 aus Fig. 1 lediglich durch das Fehlen der Trennwand 16, die die Einströmseite des Venturi-Rohrs 12 von der Abströmseite strömungstechnisch trennt. Im Übrigen sind in Fig. 2 jeweils gleiche Merkmale mit den gleichen Bezugszeichen wie in Fig. 1 gekennzeichnet. Aufgrund der strömungsoffenen Bauweise der Vorrichtung 20 wird ein Teil des vor der Mündungsöffnung 4 des Trichters 3 der Vorrichtung 20 vorliegenden Gemisches aus Stickstoffgas, Kohlendioxidgas und Kohlendioxidschnee infolge der Saugwirkung des aus der Entspannungsdüse 5 austretenden Stroms aus Kohlendioxidgas und Kohlendioxidschnee zur Zuströmseite des Venturi-Rohrs 12 zurückgeführt, wie durch die Pfeile 21 angedeutet. Somit gelangt nur ein Teil des Stroms aus Stickstoffgas, Kohlendioxidgas und Kohlendioxidschnee unmittelbar auf die Oberfläche eines zu kühlenden Produkts, wie durch die Pfeile 22 angedeutet. Der zurückgeführte Teil des Stroms aus Stickstoffgas, Kohlendioxidgas und Kohlendioxidschnee wird zusammen mit dem aus der Entspannungsdüse 8 austretenden Strom aus Kohlendioxidgas und Kohlendioxidschnee erneut in das Venturi-Rohr 12 eingeleitet und dort mit frischem kalten Stickstoff aus der Zuleitung 14 vermischt. Bei dieser Variante der Erfindung ergeben sich eine besonders gute Durchmischung des gasförmigen Stickstoffs mit dem Strom aus Kohlendioxidgas und Kohlendioxidschnee und insgesamt eine gute Durchkühlung der festen Kohlendioxidpartikel. Diese Variante ermöglicht daher eine besonders wirtschaftliche Nutzung der Kälteenergie des Stickstoffgases.

### Bezugszeichenliste

- 1.: Vorrichtung
- 2.: Schneehorn
- 3.: Trichter
- 4.: Mündungsöffnung
- 5.: Entspannungseinrichtung
- 6.: Stirnfläche
- 7.: Achse
- 8.: Entspannungsdüse
- 9.: Druckleitung
- 10.: Führungstrichter
- 11.: -
- 12.: Venturi-Rohr
- 13.: Ringdüse
- 14.: Zuleitung
- 15.: -
- 16.: Trennwand
- 17.: Pfeil
- 18.: -
- 19.: -
- 20.: Vorrichtung
- 21.: Pfeil
- 22.: Pfeil

## Patentansprüche

1. Verfahren zum Kühlen von Produkten, bei dem unter Druck herangeführtes flüssiges Kohlendioxid an einer Kohlendioxid-Entspannungsdüse (5) zu Kohlendioxidgas und Kohledioxidschnee entspannt und der Kohlendioxidschnee zum Kühlen eines Produkts eingesetzt wird,
wobei der aus der Kohlendioxid-Entspannungsdüse (5) austretende Strom aus Kohlendioxidschnee und Kohlendioxidgas nach seiner Erzeugung mit einem kalten Gasstrom durchmischt und dadurch gekühlt wird, **dadurch gekennzeichnet, dass** der kalten Gasstrom der dem Strom aus Kohlendioxidteilchen und Kohlendioxidgas über eine von der Entspannungsdüse (5) beabstandete Kaltgasdüse (13) zugeführt wird und ein Teilstrom des zur Kühlung des Stroms aus Kohlendioxidschnee und Kohlendioxidgas eingesetzten kalten Gasstroms rezirkuliert und zur Kühlung des aus der Entspannungsdüse (5) austretenden Stroms aus Kohlendioxidschnee und Kohlendioxidgas eingesetzt wird.

2. Verfahren nach Anspruch 1, **dadurch gekennzeichnet, dass** der zur Kühlung des Stroms aus Kohlendioxidschnee und Kohlendioxidgas vorgesehene Kaltgasstrom zur Vorkühlung des flüssigen Kohlendioxids vor dessen Zuführung an die Kohlendioxid-Entspannungsdüse (5) eingesetzt wird.

3. Verfahren nach Anspruch 1 oder 2, **dadurch gekennzeichnet, dass** es sich beim Kaltgasstrom um ein kaltes kryogenes Gas handelt, beispielsweise Stickstoff, Sauerstoff oder Argon, welches im gasförmigen oder verflüssigten Zustand vorliegt und vor dem Kontakt mit dem Strom aus Kohlendioxidschnee und Kohlendioxidgas eine Temperatur von unter minus 100°C (173 K), bevorzugt von unter minus150°C (123 K) aufweist.

4. Vorrichtung zum Kühlen von Produkten mit Trockeneisteilchen, mit einer an einer Druckleitung (9) für flüssiges Kohlendioxid angeschlossenen Kohlendioxid-Entspannungsdüse (5) zum Erzeugen eines Stroms von Trockeneisteilchen und mit einer an eine Zuleitung (14) für einen Kaltgasstrom angeschlossenen Kaltgas-Austrittsdüse (13) zum Unterkühlen der Trockeneisteilchen, und mit einer Einrichtung (2) zum Zuführen der unterkühlten Trockeneisteilchen an ein Produkt, **dadurch gekennzeichnet dass** die Kaltgas-Austrittsdüse (13) in Ausströmrichtung axial beabstandet von der Ausmündung der Kohlendioxid-Entspannungsdüse (5) angeordnet ist und als Ringdüse ausgebildet ist, die konzentrisch zur Ausmündung der Kohlendioxid-Entspannungsdüse (5) angeordnet ist.

5. Vorrichtung nach Anspruch 4, **dadurch gekennzeichnet, dass** die Kaltgas-Austrittsdüse (13) in einer vor der Ausmündung der Kohlendioxid-Entspannungsdüse angeordneten Venturi-Düse (12) integriert ist.

6. Vorrichtung nach einem der Ansprüche 4 oder 5, **dadurch gekennzeichnet, dass** die Kohlendioxid-Entspannungsdüse (5) und/oder die Kaltgas-Austrittsdüse (13) in einem Schneehorn (2) integriert sind.

7. Vorrichtung nach Anspruch 6, **dadurch gekennzeichnet, dass** im Schneehorn (2) Mittel zum Rezirkulieren des aus der Kohlendioxid-Entspannungsdüse (5) austretenden Stroms aus Kohlendioxidgas und festen Kohlendioxidpartikeln und/oder des aus der Kaltgas-Austrittsdüse (13) austretenden Gasstroms vorgesehen sind.

## Claims

1. Process for the cooling of products, where liquid carbon dioxide introduced under pressure is depressurized at a carbon-dioxide-depressurization nozzle (5) to give carbon dioxide gas and carbon dioxide snow, and the carbon dioxide snow is used for the cooling of a product, where,
after production of the stream of carbon dioxide snow and carbon dioxide gas that emerges from the carbon-dioxide-depressurization nozzle (5), the said stream is mixed with a cold gas stream and is thus cooled, **characterized in that** the cold gas stream is conducted to the stream of carbon dioxide particles and carbon dioxide gas by way of a cold-gas nozzle (13) distanced from the depressurization nozzle (5), and a substream of the cold gas stream used for the cooling of the stream of carbon dioxide snow and carbon dioxide gas is recirculated and used for the cooling of the stream of carbon dioxide snow and carbon dioxide gas that emerges from the depressurization nozzle (5).

2. Process according to Claim 1, **characterized in that** the cold gas stream intended for the cooling of the stream of carbon dioxide snow and carbon dioxide gas is used for the precooling of the liquid carbon dioxide before it is conducted to the carbon-dioxide-depressurization nozzle (5) .

3. Process according to Claim 1 or 2, **characterized in that** the cold gas stream consists of a cold cryogenic gas, for example nitrogen, oxygen, or argon, which is in the gaseous or liquefied state and the temperature of which before contact with the stream of carbon dioxide snow and carbon dioxide gas is below minus 100°C (173 K), preferably below minus 150°C (123 K).

4. Device for the cooling of products with dry-ice particles with, attached on a pressure line (9) for liquid carbon dioxide, a carbon-dioxide-depressurization nozzle (5) for the production of a stream of dry-ice particles and with, attached to a supply line (14) for a cold gas stream, a cold-gas-discharge nozzle (13) for the additional cooling of the dry-ice particles,
and with equipment (2) for conducting the additionally cooled dry-ice particles to a product, **characterized in that** the cold-gas-discharge nozzle (13) is distanced axially in outflow direction from the outlet of the carbon-dioxide-depressurization nozzle (5) in the arrangement and is configured as annular nozzle which is concentric in relation to the outlet of the carbon-dioxide-depressurization nozzle (5) in the arrangement.

5. Device according to Claim 4, **characterized in that** the cold-gas-discharge nozzle (13) is integrated in a venturi nozzle (12) arranged in front of the outlet of the carbon-dioxide-depressurization nozzle.

6. Device according to Claim 4 or 5, **characterized in that** the carbon-dioxide-depressurization nozzle (5) and/or the cold-gas-discharge nozzle (13) are integrated in a snow horn (2).

7. Device according to Claim 6, **characterized in that** in the snow horn (2) there are means provided for the recirculation of the stream of carbon dioxide gas and solid carbon dioxide particles emerging from the carbon-dioxide-depressurization nozzle (5) and/or of the gas stream emerging from the cold-gas-discharge nozzle (13).

## Revendications

1. Procédé pour le refroidissement de produits, selon lequel du dioxyde de carbone liquide alimenté sous pression est détendu dans une buse de détente de dioxyde de carbone (5) en dioxyde de carbone gazeux et neige carbonique et la neige carbonique est utilisée pour le refroidissement d'un produit,
le courant de neige carbonique et de dioxyde de carbone gazeux sortant de la buse de détente de dioxyde de carbone (5) étant mélangé après sa formation avec un courant gazeux froid et ainsi refroidi, **caractérisé en ce que** le courant gazeux froid est acheminé vers le courant de particules de dioxyde de carbone et de dioxyde de carbone gazeux par l'intermédiaire d'une buse de gaz froid (13) espacée de la buse de détente (5), et un courant partiel du courant gazeux froid utilisé pour le refroidissement du courant de neige carbonique et de dioxyde de carbone gazeux est recirculé et utilisé pour le refroidissement du courant de neige carbonique et de dioxyde de carbone gazeux sortant de la buse de détente (5).

2. Procédé selon la revendication 1, **caractérisé en ce que** le courant gazeux froid prévu pour le refroidissement du courant de neige carbonique et de dioxyde de carbone gazeux est utilisé pour le pré-refroidissement du dioxyde de carbone liquide avant son acheminement vers la buse de détente de dioxyde de carbone (5).

3. Procédé selon la revendication 1 ou 2, **caractérisé en ce que** le courant gazeux froid consiste en un gaz cryogène froid, par exemple de l'azote, de l'oxygène ou de l'argon, qui se présente à l'état gazeux ou liquéfié, et présente avant le contact avec le courant de neige carbonique et de dioxyde de carbone gazeux une température inférieure à moins 100 °C (173 K), de préférence inférieure à moins 150 °C (123 K).

4. Dispositif pour le refroidissement de produits contenant des particules de glace sèche, comprenant une buse de détente de dioxyde de carbone (5), raccordée à une conduite sous pression (9) pour du dioxyde de carbone liquide, pour la formation d'un courant de particules de glace sèche, et comprenant une buse de sortie de gaz froid (13), raccordée à une conduite d'alimentation (14) pour un courant de gaz froid, pour le sous-refroidissement des particules de glace sèche, et comprenant un appareil (2) pour l'acheminement des particules de glace sèche sous-refroidies vers un produit, **caractérisé en ce que** la buse de sortie de gaz froid (13) est agencée espacée axialement de l'embouchure de la buse de détente de dioxyde de carbone (5), dans la direction de sortie, et configurée sous la forme d'une buse annulaire, qui est agencée concentriquement à l'embouchure de la buse de détente de dioxyde de carbone (5).

5. Dispositif selon la revendication 4, **caractérisé en ce que** la buse de sortie de gaz froid (13) est intégrée dans une buse Venturi (12) agencée avant l'embouchure de la buse de détente de dioxyde de carbone.

6. Dispositif selon l'une quelconque des revendications 4 ou 5, **caractérisé en ce que** la buse de détente de dioxyde de carbone (5) et/ou la buse de sortie de gaz froid (13) sont intégrées dans un cornet à neige (2).

7. Dispositif selon la revendication 6, **caractérisé en ce que** des moyens pour la recirculation du courant de dioxyde de carbone gazeux et de particules solides de dioxyde de carbone sortant de la buse de détente de dioxyde de carbone (5) et/ou du courant gazeux sortant de la buse de sortie de gaz froid (13) sont prévus dans le cornet à neige (2).
